# EUROPEAN PATENT APPLICATION

(11) **EP 2 476 550 A1**
(43) Date of publication of application: **18.07.2012**
(21) Application number: 11186028.4
(22) Date of filing: 20.10.2011
(51) Int. Cl.: B32B 17/10, B30B 5/02

(54) **Laminating device for photovoltaic modules**

(30) Priority: 18.01.2011 IT PD20110011
(71) Applicant: 2BG S.r.l., 35018 San Martino di Lupari (PD) (IT)
(72) Inventor: Bernardi, Dario, 35018 San Martino di Lupari, Padova (IT); Galiazzo, Antonio, 35018 San Martino di Lupari, Padova (IT); Guidolin, Javier, 35018 San Martino di Lupari, Padova (IT)
(74) Representative: Mitola, Marco

(57) **Abstract**

The present invention concerns a laminating device for photovoltaic modules, comprising: - a support plane 3 on which can be placed a module to be laminated; - a cover 10, which is arranged above the support plane and is movable between an open position, in which it is raised from the support plane, and a closed position, in which it is lowered in abutment with the support plane to define with the latter a closed treatment chamber for the module. The device is characterised by the fact that the hollow cover 10 comprises at least one portion 12 made of transparent material to permit observing the treatment chamber when the cover is closed.

## Description

### Field of application

The subject of the present invention is a laminating device for photovoltaic modules.

Advantageously, the laminating device according to the present invention is particularly suitable for use in laboratories for conducting, for example, experimental tests on new laminating cycles and/or on photovoltaic modules made with new materials and/or on new laminating membranes.

### State of the art

As is known, the purpose of the process of lamination of a photovoltaic module is to joint together the different layers making up a module, i.e., in particular, supporting base (e.g., in glass or polymers), photovoltaic cells, cell covering sheets (e.g., in EVA, ethyl-vinyl-acetate) and protective sheet (e.g., in polyester). The lamination process involves the module undergoing a vacuum firing heat treatment.

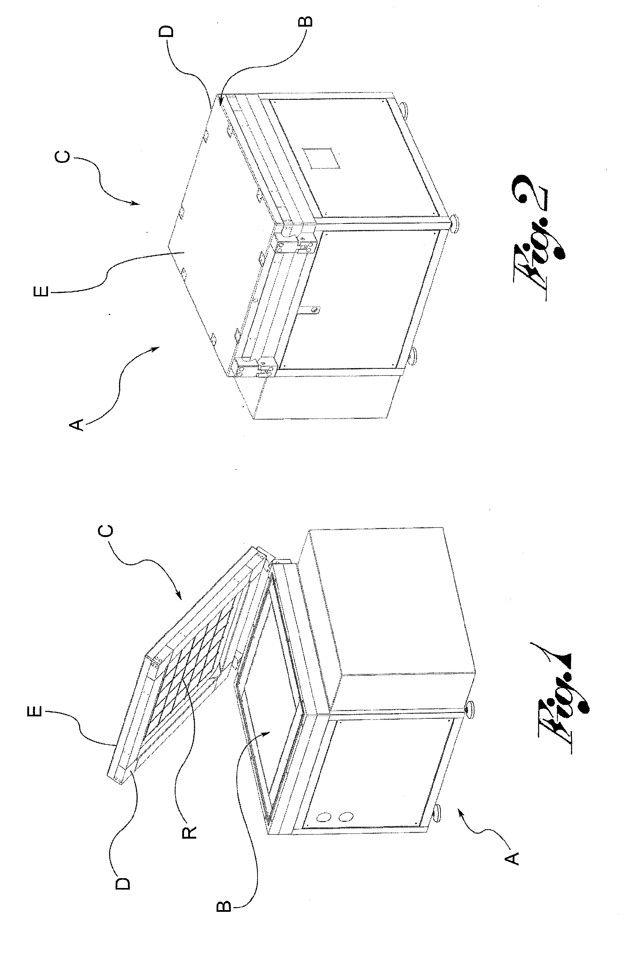

Generally speaking, as shown in the attached Figure 1, a laminating device for photovoltaic modules of known type A comprises a support plane B on which is placed the module to be treated (not shown) and a hollow cover C which abuts with its perimeter on the support plane B thus creating a closed treatment chamber where the module is arranged.

The heat required for the heat treatment is supplied by means of electrical resistors (not shown in the Figures) arranged below the support plane B.

The vacuum inside the treatment chamber is created by means of suitable means for creating vacuum (not shown in the attached Figures) fluidically connected to the support plane and by means of a membrane (not shown) associated to the cover C, in correspondence of a side facing the support plane. Operatively, once the cover is closed, with the start of the vacuum creating means the membrane adheres to the module and presses it against the support plane.

More in detail, the cover C comprises a perimetric support frame D (made of steel), which is destined to abut with its perimeter on the support plane, and a closure plate E (made of steel), detachably associated to the frame D by means of suitable connection means (not shown). The membrane is placed between the frame D and the plate E so as to face towards the support plane B inside the hollow space defined by the cover C.

The module, positioned on the support plane, finds itself within the hollow space internally defined by the frame, the thickness of which defines the height of the treatment chamber.

It is necessary to check the contact of the membrane with the module. To avoid the membrane coming immediately into contact with the module by gravity, once the cover is closed, vacuum is created between the membrane and the plate so as to keep the membrane in contact with the plate, up to a preset step of lamination when the membrane must come into contact with the module. In particular, the vacuum between the membrane and the plate is created in correspondence to a grid of grooves R obtained on the side of the plate faced towards the membrane.

Generally speaking, the laminating device has an automatic system for the management and control of the process parameters.

The currently-known laminating devices do not however permit an operator to assess the effects of lamination on the photovoltaic module during the performance of the process itself, nor to assess the behaviour of the membrane. The operator can in fact check the process parameter trend (temperature, vacuum) in real time thanks to the automatic control and management system, but must wait for the end of the process to assess the quality of the lamination treatment, the condition of the membrane and the end conditions of the module undergoing lamination.

### Presentation of the invention

Consequently, the object of the present invention is to eliminate the problems associated to the above-described state of the art, by providing a laminating device for photovoltaic modules which permits monitoring the behaviour of the membrane in real time.

A further object of the present invention is to provide a laminating device for photovoltaic modules which permits monitoring the effects of the lamination process on the photovoltaic module in real time.

A further object of the present invention is to provide a laminating device for photovoltaic modules, which is simple and inexpensive to make.

A further object of the present invention is to provide a laminating device for photovoltaic modules, which is simple and fast to use.

### Brief description of the drawings

The technical characteristics of the invention, according to the above objects, are clearly understandable from the contents of the following claims and the advantages of same will appear more evident from the following detailed description, made with reference to the attached drawings, which show one or more embodiments provided as examples only and which are in no way limitative, wherein:

- the Figures 1 and 2 show a laminating device for photovoltaic modules of traditional type shown without membrane, with open cover and closed cover respectively;

- the Figure 3 shows a laminating device for photovoltaic modules according to a preferred embodiment of the invention, shown without membrane with open cover;

- the Figure 4 shows the laminating device of figure 3 shown with closed cover; and

- the Figure 5 shows a laminating device according to a preferred embodiment of the invention, shown with closed cover and with fitted membrane.

### Detailed description

The laminating device for photovoltaic modules according to the invention will be indicated altogether by 1 in the attached Figures.

According to a general embodiment of the invention, the laminating device for photovoltaic modules, comprises:

- a support plane 3 on which a photovoltaic module to be laminated can be placed;

- a cover 10, which is positioned above the support plane 3 and is movable with respect to the support plane 3 between an opening position, wherein it is raised from the support plane 3, and a closing position, wherein it is lowered abutting with the support plane 3 to define with the latter a closed treatment chamber for the module;

- means for sullpying heat inside the treatment chamber;

- means 20 for compressing under vacuum the module positioned inside the treatment chamber.

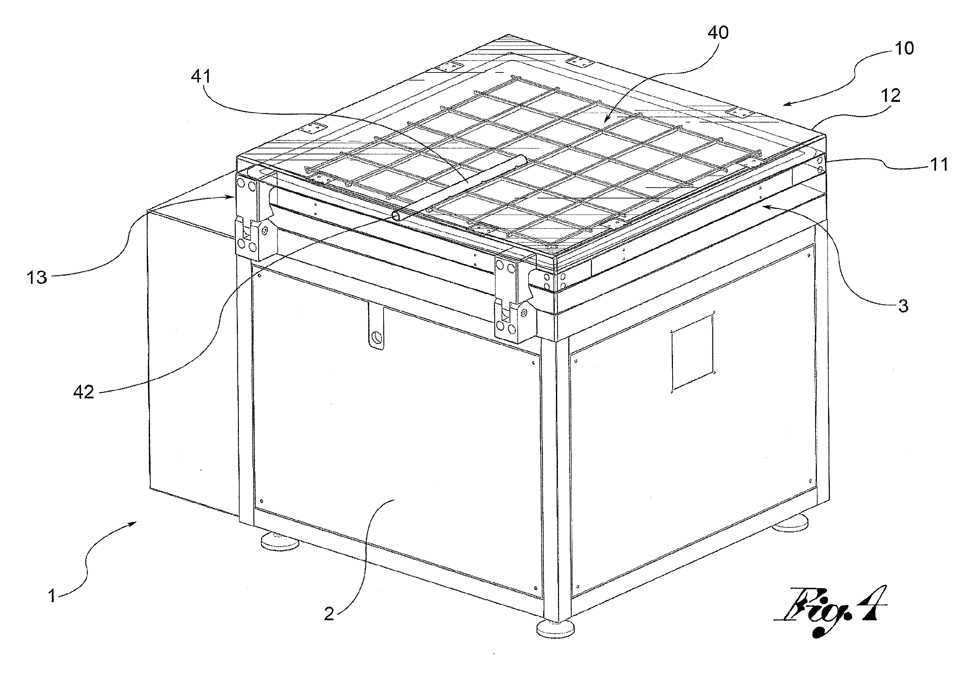

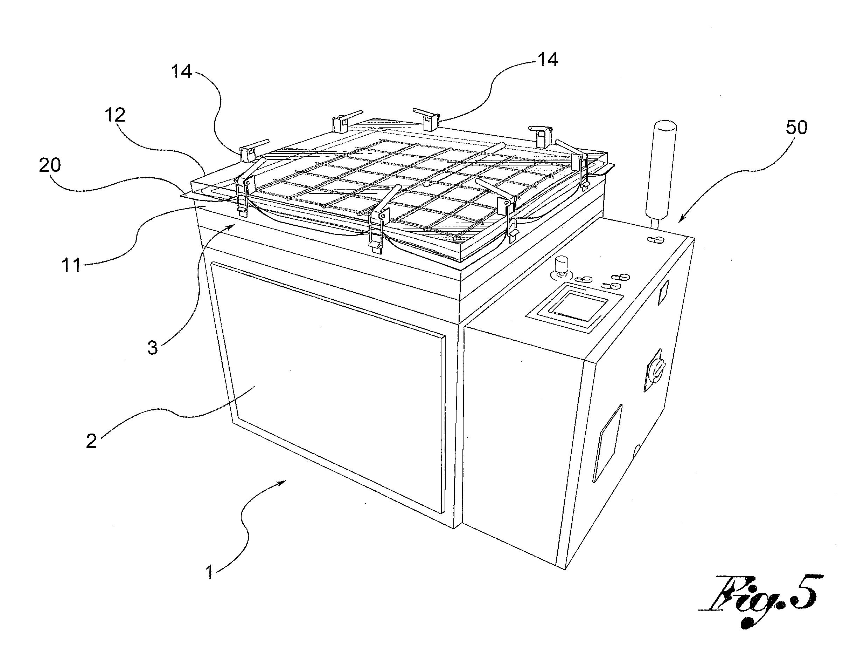

According to the particular embodiment solution shown on the attached Figures, the device 1 comprises a support structure 2 above which the support plane 3 is made. Advantageously, as shown in the Figures 4 and 5, the cover 10 is connected to the support structure 2 by means of one or more hinges 13 so as to open with respect to the support plane 3. Other types of connection and cover movement with respect to the support plane and the support structure can however be foreseen.

Preferably, the heat supplying means (not shown) consist of electrical resistors arranged below the support plane 3, inside the above support structure 2.

Preferably, the means for compressing the module under vacuum inside the treatment chamber comprise a membrane 20, associated to the cover 10 in correspondence to a side faced towards the support plane 3, and vacuum creating means (not shown in the Figures), which are positioned inside the support structure and which are fluidly connected to the treatment chamber in correspondence to the support plane 3.

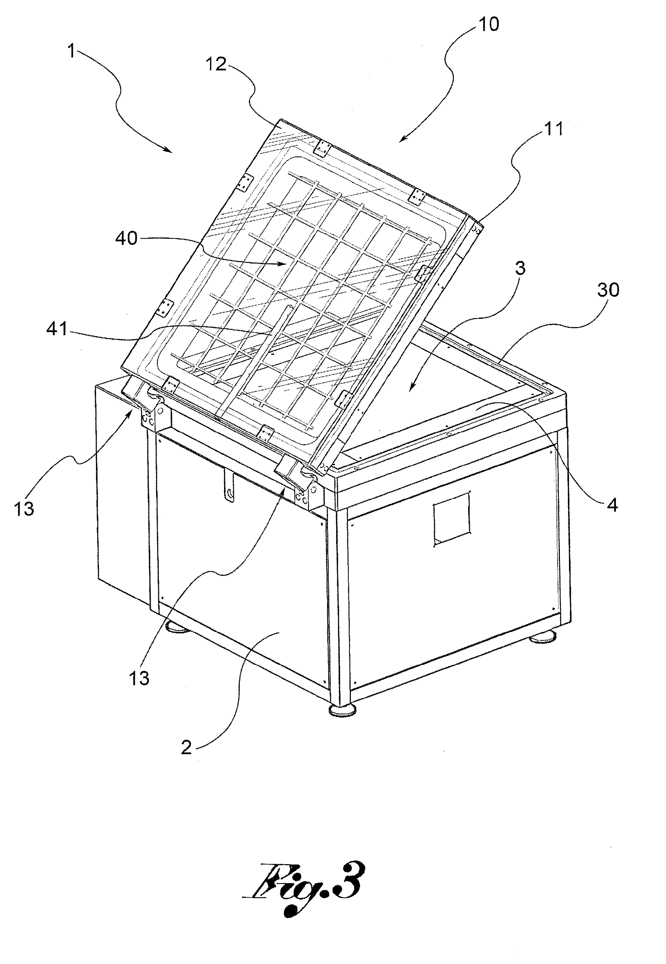

In particular, as shown in Figure 3, on the support plane 3, a perimetric band 4 can be provided which is not to be occupied by the module and in correspondence to which holes are obtained for fluidic connection with the vacuum creating means.

Operatively, once the cover 10 has been closed, with the start of the vacuum creating means, the membrane 20 is pushed by the pressure difference to adhere on the module, pressing this against the support plane 3.

According to the invention, the cover 10 comprises at least one portion 12 made of transparent material to allow observing the treatment chamber when the cover is closed. This makes it possible to directly observe what is happening inside the treatment chamber during the module lamination process.

The possibility of a continuous direct observation with the treatment chamber allows collecting information about the development of the lamination process. In particular, the behaviour of the membrane, the condition of the photovoltaic module and the effects of the firing and of the compression on module can be assessed. This is particularly useful in case of new lamination cycles being tried out and it is therefore interesting to evaluate in real time the effects of the changes on the process parameters introduced in traditional or already-tested cycles.

Preferably, the above transparent material is a plastic or glass polymer. In particular, as plastic material, poly(methyl methacrylate) (PMMA) can be used.

According to a preferred embodiment shown on the attached Figures, the cover 10 has a hollow structure which defines the above treatment chamber when the cover 10 is lowered in abutment with the support plane 3.

Preferably, in correspondence to the abutment surfaces, hermetic sealing means 30 are provided on the cover and/or on the support plane.

In particular, the cover 10 comprises:
- a perimetric support frame 11, which is destined to go perimetrically in abutment with the support plane 3, when the cover is closed, and which laterally delimits the treatment chamber at the side;
- a closure plate 12, which is associated to the frame 11 on the opposite side to that of abutment with the support plane 3 and which upwardly delimits the treatment chamber above.

Preferably, the plate 12 is detachably associated to the frame 11, e.g., by means of closing clamps 14, as shown in Figure 5. The membrane 20 is interposed between the frame 11 and the plate 12 so as to be facing the support plane 3 inside the hollow space defined by the cover 10.

Preferably, the membrane 20 is made of a transparent material so as to allow a complete observation of the photovoltaic module positioned inside the treatment chamber.

In particular, the membrane can be made of transparent silicone.

Alternatively, a membrane can be made of non-transparent material, in case that there is interest only to assess the behaviour of the membrane and not to observe in a specific way the effects of the lamination process on the module.

Advantageously, the laminating device 1 can be provided with means for controlling the movement of the membrane during the lamination process.

In particular, such control means can consist of a vacuum creating device fluidically connected to the space between the membrane 20 and the cover 10. To avoid the membrane coming immediately into contact with the module by gravity, once the cover is closed, vacuum is in fact created between the membrane and the cover (in particular the closure plate) so as to keep the membrane in contact with the cover (specifically the plate) until a preset step of the lamination process, when the membrane must come into contact with the module.

More in detail, to make it easier to create the vacuum between the membrane and the closure plate, on the side of the plate faced towards the membrane a grid of grooves 40 is made, in correspondence to which groves the vacuum is applied, e.g., by means of a specific pipe 41 arranged inside the plate 12 and accessible from outside through an opening 42.

According to the preferred embodiment shown on the attached Figures, said portion of the cover made of transparent material consists of the entire closure plate 12.

According to an embodiment not shown on the attached Figures, said portion of the cover made of transparent material consists only of a part of the closure plate 12.

In particular, such portion made of transparent material consists of a part of the plate 12 directly facing the support plane and therefore not facing the frame 11.

More in particular, the portion made of transparent material consists of a part of the plate 12 facing the part of the support plane 3 which can be occupied by a module to be treated. For example, the perimetric band 4 wherein are obtained the holes for the fluidic connection with the vacuum creating means can be excluded.

The closure plate 12 can comprise in particular a perimetric support structure and a central panel fixed to the perimetric structure. The portion made of transparent material consists of the panel. The perimetric structure can be made of metal and has a shape corresponding to the frame 11. The closure plate 12 is associated to the frame 11, e.g., by means of closing clamps, in correspondence to the perimetric support structure.

The frame 11 can be made of any material suitable for the purpose, transparency not being necessary. For example, the frame 11 can be made of metal. It is however possible to make the frame in the same material used to make the closure plate 12.

Advantageously, the device 1 has an automatic system 50 for the management and the control of the lamination process.

The present invention provides various advantages, some of which have already been expounded.

The laminating device for photovoltaic modules according to the present invention, in particular allows monitoring the behaviour of the membrane during the lamination process in real time.

The laminating device according to the present invention, in particular in the embodiment with membrane in transparent material, allows observing the inside of the treatment chamber with cover closed and therefore monitoring the effects of the lamination process on the photovoltaic module in real time.

The laminating device is simple and inexpensive to make, inasmuch as it does not require particularly costly modifications or major constructive changes to traditional devices.

The device according to the invention is also of simple and immediate use, inasmuch as it allows performing a visual observation inside the treatment chamber.

The laminating device according to the present invention is particularly suitable for use in laboratories, above all in versions sized for small photovoltaic modules, e.g., with dimensions below 1,000 mm by 1,000 mm.

The invention thus conceived therefore achieves the preset objects.

Obviously, in its practical embodiment, it may also take on shapes and configurations different to that illustrated above, without, because of this, falling outside the present scope of protection.

Furthermore, all the parts can be replaced by technically equivalent elements and the dimensions, the shapes and the materials used may be of any kind depending on requirements.

## Claims

1. Laminating device for photovoltaic modules, comprising:
- a support plane (3) on which a module to be laminated can be placed;
- a cover (10), which is positioned above the support plane (3) and is movable between an open position, in which it is raised from the support plane (3), and a closed position, in which it is lowered in abutment with the support plane (3) to define with the latter a closed treatment chamber for the module;
- means for supplying heat to the inside of the treatment chamber;
- means for compressing under vacuum (20) the module positioned inside the treatment chamber;
**characterised by** the fact that the hollow cover (10) comprises at least one portion (12) made of transparent material to permit observation of the treatment chamber when the cover is closed.

2. Device according to the claim 1, wherein said transparent material is a plastic polymer or glass.

3. Laminating device according to the claim 1 or 2, wherein the cover (10) has a hollow structure and comprises:
- a perimetric support frame (11), which is destined to abut with the support plane (3), when the cover is closed, and which laterally delimits the treatment chamber;
- a closure plate (12), which is associated to the frame (11) on the side opposite that abutting with the support plane (3) and which upwardly delimits the treatment chamber.

4. Laminating device according to the claim 3, wherein said portion of the cover made in transparent material consists of the entire closure plate (12).

5. Laminating device according to the claim 3, wherein said portion of the cover made of transparent material consists of a part of said plate (12).

6. Device according to claim 5, wherein said portion made of transparent material consists of a part of the plate (12) not facing the frame (11).

7. Device according to claim 5 or 6, wherein said closure plate (12) comprises a perimetric support structure and a central panel attached to the perimetric structure, said portion made of transparent material consisting of said panel, said perimetric structure having a shape corresponding to said frame (11).

8. Laminating device according to one or more of the preceding claims, wherein said vacuum compressing means comprise a membrane (20) associated to said cover (10) in correspondence to a side facing the support plane (3).

9. Laminating device according to one or more of the claims from 3 to 7 and to claim 8, wherein said plate (12) is detachably associated to said frame (11), said membrane (20) being interposed between the frame (11) and the plate (12) so as to face the support plane (3).

10. Laminating device according to claim 9, wherein said membrane (20) is made of transparent material to permit observation of the module positioned inside the treatment chamber.
